# EUROPEAN PATENT APPLICATION

(11) **EP 2 700 295 A1**
(43) Date of publication of application: **26.02.2014**
(21) Application number: 13178494.4
(22) Date of filing: 30.07.2013
(51) Int. Cl.: A01D 41/14, A01D 57/06, A01D 57/20, A01D 61/02

(54) **Harvesting head with crop deflector**

(30) Priority: 22.08.2012 US 201213591464
(71) Applicant: Deere & Company, Moline, IL 61265-8098 (US)
(72) Inventor: Washburn, Aj, Orion, IL 61273 (US); Hoffman, Daniel S., East Moline, IL 61244 (US); Borkgren, Nicholas R., Cambridge, IL 61238 (US)
(74) Representative: Holst, Sönke

(57) **Abstract**

A harvesting head **(100)** has a laterally extending frame **(102)** on which left and right side conveyor belts **(120, 122)** are supported. A center conveyor belt **(124)** is disposed between the left and right side conveyor belts **(120, 122)** to receive crop material from the left and right side conveyor belt **(120, 122)** and carry it rearward. Crop deflectors **(112, 114)** are disposed between the left side conveyor belt **(120)** and the center conveyor belt **(124)** and between the right side conveyor belt **(122)** and the center conveyor belt **(124)** to deflect cut crop material away from the gaps between the belts and prevent substantially all the cut crop material from being drawn into the gaps between the belts and ejected onto the ground.

## Description

### Field of the Invention

This invention relates to harvesting heads. More particularly it relates to deflectors for deflecting cut crop that is carried on endless belt conveyors of the harvesting heads.

### Background of the Invention

Agricultural harvesters are comprised of a self propelled agricultural harvesting vehicle often called a "combine" that supports an agricultural harvesting head also known as a "header". The header separates the crop from the ground and carries it rearward through an opening in the header. The crop is then sent to the agricultural harvesting vehicle where it is threshed, separated, and cleaned.

In one arrangement the headers have left and right side endless belt conveyors to convey crops laterally inward toward a central region of the header. The outlets of these conveyors face each other and project crop toward each other at the middle of the header. Disposed between the left and right side conveyors is a center conveyor. The center conveyor is disposed slightly below the left and right side conveyors. The center conveyor receives crop falling from the outlets of the left and right side conveyors. The center conveyor conveys the crop rearward (i.e. at right angles to the crop flow direction of the left and right side conveyors.

One problem with this arrangement is that of crop loss. Crop that travels completely across the center of conveyor can become wedged between the side conveyor and the center conveyor on the opposing side of the center conveyor from where the crop enters. Even worse, the crop can pass through the gap between the side conveyor and center conveyor and be deposited on the ground.

By providing a deflector at the outlets of each of the left and right side conveyors, a substantial portion of this cut crop material can be prevented from being pulled underneath the left and right side conveyors and deposited on the ground.

### Summary of the Invention

In accordance with one aspect of the invention, a harvesting head is provided having
a laterally extending frame,
a left side conveyor belt supported by the laterally extending frame, the left side conveyor belt having an upper surface and a crop outlet, the upper surface being configured to convey crops in a first direction, the left side conveyor belt being supported at its innermost extent on a first inner conveyor roller,
a right side conveyor belt supported by the laterally extending frame, the right side conveyor belt having an upper surface and a crop outlet, the upper surface being configured to convey crops in a second direction, the right side conveyor belt being supported at its innermost extent on a second inner conveyor roller,
wherein the first direction and the second direction are diametrically opposed, and
a center conveyor belt disposed between and slightly below the outlets of the left and right side conveyors, the center conveyor belt having an upper surface configured to convey crops in a third direction normal to both the first direction and the second direction end,
a first crop deflector extending across substantially the entire width of the left side conveyor belt, the first crop deflector having a leading edge that extends across substantially the entire width of the left side conveyor belt and parallel with the rotational axis of the inner roller of the left side conveyor and at at least the same height as the rotational axis of the inner roller of the left side conveyor, and a trailing edge opposite the leading edge that extends across substantially the entire width of the left side conveyor belt and is generally parallel to and spaced slightly apart from the upper surface of the center conveyor belt,
a second crop deflector extending across substantially the entire width of the right side conveyor belt, the second crop deflector having a leading edge that extends across substantially the entire width of the right side conveyor belt and parallel with the rotational axis of the inner roller of the right side conveyor and at at least the same height as the rotational axis of the inner roller of the right side conveyor, and a trailing edge opposite the leading edge of the second crop deflector, wherein the trailing edge of the second crop deflector extends across substantially the entire width of the right side conveyor belt and is generally parallel to and spaced slightly apart from the upper surface of the center conveyor belt.

The left side conveyor belt, the right side conveyor belt and the center conveyor belt made each be an endless loop of elastomer-coated fabric and may be configured to convey a mat of fibrous plant stalks and loose seed.

A first gap may be provided between the leading edge of the first crop deflector and the left side conveyor belt that extends substantially the entire width of the left side conveyor belt and is below the top surface of the left side conveyor belt and is narrow enough to prevent substantially all the cut crop material exiting the left side conveyor belt from entering the first gap.

A second gap may be provided between the leading edge of the second crop deflector and the right side conveyor belt that extends substantially the entire width of the right side conveyor belt and is below the top surface of the right side conveyor belt and is narrow enough to prevent substantially all the cut crop material exiting the right side conveyor belt from entering the second gap.

A third gap may be provided between the trailing edge of the first crop deflector and the center conveyor belt that extends substantially the entire length of the center conveyor belt and is below the leading edge and is narrow enough to prevent substantially all the cut crop material exiting the right side conveyor belt from entering the third gap.

A fourth gap may be provided between the trailing edge of the second crop deflector and the center conveyor belt that extends substantially the entire length of the center conveyor belt and is below the leading edge and is narrow enough to prevent substantially all the cut crop material exiting the left side conveyor belt from entering the fourth gap.

In accordance with another aspect of the invention, a harvesting head crop deflector is provided, the harvesting head having a laterally extending frame, a left side conveyor belt supported by the laterally extending frame on the left side of the laterally extending frame, the left side conveyor belt having an upper surface and a crop outlet, the upper surface being configured to convey cut crop material in a first direction, the left side conveyor belt being supported at its innermost extent on a first inner conveyor roller, a right side conveyor belt supported by the laterally extending frame on the right side of the laterally extending frame, located opposite to and spaced apart from the left side conveyor belt, the right side conveyor belt having an upper surface and a crop outlet, the upper surface being configured to convey cut crop material in a second direction, the right side conveyor belt being supported at its innermost extent on a second inner conveyor roller, wherein the first direction and the second direction are diametrically opposed, a center conveyor belt disposed between and below the outlets of the left and right side conveyors, the center conveyor belt having an upper surface configured to convey crops in a third direction normal to both the first direction and the second direction,
wherein the crop deflector is an elongate member that extends across substantially the entire width of either the left side conveyor belt or the right side conveyor belt, wherein the crop deflector has a leading edge configured to extend across substantially the entire width of said either the left side conveyor belt or the right side conveyor belt, wherein the crop deflector extends parallel with the rotational axis of either the first inner conveyor roller or the second inner conveyor roller and at at least the same height as the rotational axis of either the first inner conveyor roller or the second inner conveyor roller, the crop deflector further having a trailing edge opposite the leading edge, wherein said trailing edge is configured to extend across substantially the entire width of the left side conveyor belt or the right side conveyor belt and wherein said trailing edge is configured to be disposed generally parallel to and spaced slightly apart from the upper surface of the center conveyor belt.

The crop deflector may be configured to be mounted on the harvesting head such that the leading edge of the crop deflector extends substantially the entire width of either the left side conveyor belt or the right side conveyor belt and is below the top surface of said either the left side conveyor belt or the right side conveyor belt to create a first gap therebetween that is narrow enough to prevent substantially all the cut crop material exiting the said either the left side conveyor belt or the right side conveyor belt from entering the first gap.

### Brief Description of the Drawings

Figure 1 is a perspective view of a harvesting head in accordance with the present invention.
Figure 2 is a close-up fragmentary plan view of the center of the harvesting head of Figure 1.
Figure 3 is a close-up fragmentary front view of the center of the harvesting head of Figures 1-2 taken at section line 3-3 in Figure 2.

### Detailed Description

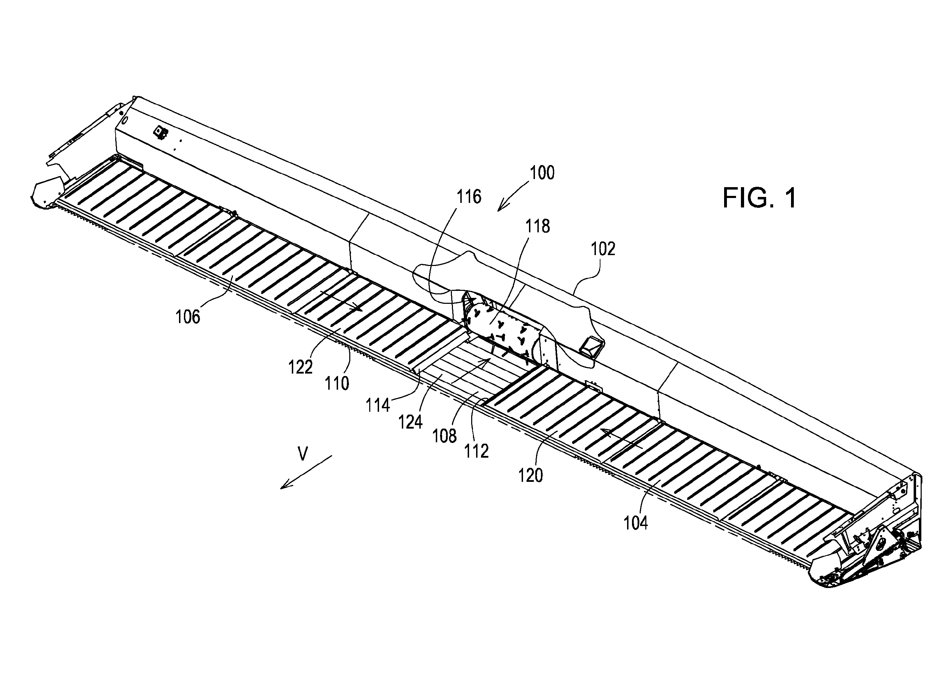

In Figure 1, a harvesting head **100** includes a laterally extending frame **102** that extends substantially the entire width of the harvesting head, a left side conveyor **104,** a right side conveyor **106,** a center conveyor **108,** a reciprocating knife **110,** a first crop deflector **112,** a second crop deflector **114,** and a feed roll **118.**

Frame **102** as a central opening **116** disposed at the middle of harvesting head **100** and in which feed roll **118** is mounted.

Left side conveyor **104** includes a left side conveyor belt **120** which is supported on rollers, and has an upper surface which conveys crop material to the right (indicated by the arrow) toward center conveyor **108.**

Right side conveyor **106** includes a right side conveyor belt **122** which has an upper surface that conveys the crop material to the left (indicated by the arrow) toward center conveyor **108**.

Center conveyor **108** includes a center conveyor belt **124** which has an upper surface that conveys the crop material to the rear (indicated by the arrow) toward central opening **116.**

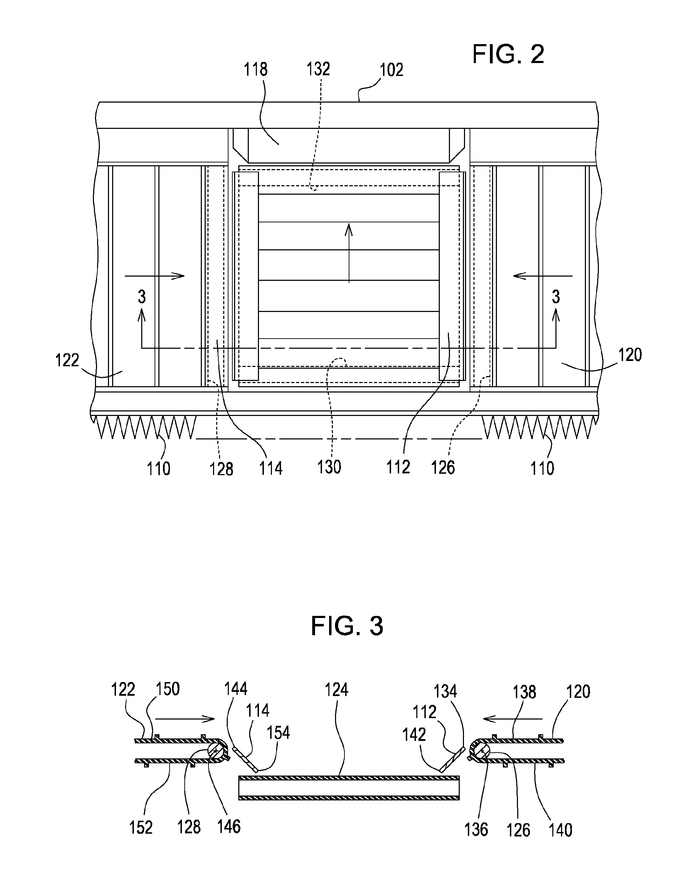

Referring to Figures 2-3, left side conveyor belt **120** is supported on an inner roller **126.** A similar outer roller (not shown) supports the outermost end of left side conveyor belt **120.**

Right side conveyor belt **122** is supported on an inner roller **128.** A similar outer roller (not shown) supports the outermost end of right side conveyor belt **122.**

Center conveyor belt **124** is supported on a forward roller **130,** and a rear roller **132.** Forward roller **130** is disposed adjacent to the forward edges of left side conveyor belt **120** and right side conveyor belt **122.** Rear roller **132** is disposed adjacent to the rear edges of left side conveyor belt **120** and right side conveyor belt **122.** The center conveyor belt **124** has an upper surface that extends across substantially the entire fore-and-aft extent of the left side conveyor belt **120** and the right side conveyor belt **122.**

The left side conveyor belt **120,** the right side conveyor belt **122,** and the center conveyor belt **124,** are formed as endless loops made of an elastomeric coated fabric.

The first crop deflector **112** is an elongate member having a longitudinal extent and a leading edge **134** that extend generally fore-and-aft. Leading edge **134** is generally parallel to the rotational axis **136** of the inner roller **126** that supports left side conveyor belt **120.** It is at the same height as the rotational axis **136,** and thus is disposed at the innermost extent of left side conveyor belt **120.** It is disposed vertically about halfway between the upper run **138** of the left side conveyor belt **120** and the lower (i.e. return) run **140** of the left side conveyor belt **120.** This vertical position permits crop that is propelled off the top surface of the left side conveyor belt **120** onto the center conveyor belt **124** to fall downward on to the top surface of first crop deflector **112,** or (depending upon the speed of the left side conveyor belt **120)** to be propelled completely across the top surface of first crop deflector **112** and onto the top surface of the center conveyor belt **124.**

The leading edge **134** is spaced away from the left side conveyor belt **120** to create a gap that extends substantially the entire width of the left side conveyor belt **120.** This gap is disposed below the top surface of the left side conveyor belt **120.** The gap is narrow enough to prevent substantially all the cut crop material exiting the left side conveyor belt **120** from entering the gap. The gap is wide enough to prevent the upper surface of left side conveyor belt **120** from rubbing against and being damaged by the leading edge **134.**

The location of the leading edge **134** of first crop deflector **112** makes it difficult for cut crop material to wrap around the inner roller **126** and be pulled into the gap between the lower run **140** of the left side conveyor belt **120** and the center conveyor belt **124.** Cut crop material that gets into this gap between the two conveyor belts is pulled downward and ejected onto the ground underneath the header.

The first crop deflector **112** has a trailing edge **142** that extends generally parallel to the leading edge **134.** The trailing edge **142** is disposed a slight distance from the upper surface of center conveyor belt **124** over substantially its entire length to create a gap therebetween. This gap is large enough to prevent the upper surface of center conveyor belt **124** from rubbing against and being damaged by the trailing edge **142,** and is small enough to prevent cut crop material ejected by the right side conveyor belt **122** from being jammed into the gap by right side conveyor belt **122,** then being pulled by the lower run of left side conveyor belt **120** into the gap between the lower run of left side conveyor belt **120** and the upper surface of center conveyor belt **124.** In this manner, crop material projected by the right side conveyor belt **122** is retained and not lost.

The upper surface of the first crop deflector **112** extends between the leading edge **134** and the trailing edge **142** of the first crop deflector **112.** The upper surface is disposed at an angle as best shown in Figure 3, such that a traversal of the upper surface of the first crop deflector **112** from the leading edge **134** to the trailing edge **142** includes a drop in height.

The second crop deflector **114** is an elongate member having a longitudinal extent and a leading edge **144** that extend generally fore-and-aft. Leading edge **144** is generally parallel to the rotational axis **146** of the inner roller **128** that supports right side conveyor belt **122.** It is at the same height as the rotational axis **146,** and thus is disposed at the innermost extent of right side conveyor belt **122.** It is disposed vertically about halfway between the upper run **150** of the right side conveyor belt **122** and the lower (i.e. return) run **152** of the right side conveyor belt **122.** This vertical position permits crop that is propelled off the top surface of the right side conveyor belt **122** onto the center conveyor belt **124** to fall downward onto the top surface of second crop deflector **114,** or (depending upon the speed of the left side conveyor belt **120)** to be propelled completely across the top surface of second crop deflector **114** and onto the top surface of the center conveyor belt **124.**

The leading edge **144** is spaced away from the right side conveyor belt **122** to create a gap that extends substantially the entire width of the right side conveyor belt **122.** This gap is disposed below the top surface of the right side conveyor belt **122.** The gap is narrow enough to prevent substantially all the cut crop material exiting the right side conveyor belt **122** from entering the gap. The gap is wide enough to prevent the upper surface of right side conveyor belt **122** from rubbing against and being damaged by the leading edge **144.**

The location of the leading edge **144** of second crop deflector **114** makes it difficult for cut crop material to wrap around the inner roller **128** and be pulled into the gap between the lower run **152** of the right side conveyor belt **122** and the center conveyor belt **124.** Cut crop material that gets into this gap between the two conveyor belts may be pulled downward and ejected onto the ground underneath the header.

The second crop deflector **114** has a trailing edge **154** that extends generally parallel to the leading edge **144.** The trailing edge **142** is disposed a slight distance from the upper surface of center conveyor belt **124** over substantially its entire length to create a gap therebetween. This gap is large enough to prevent the upper surface of center conveyor belt **124** from rubbing against and being damaged by the trailing edge **142,** and is small enough to prevent cut crop material ejected by the right side conveyor belt **122** from being jammed into the gap by right side conveyor belt **122,** then being pulled by the lower run of left side conveyor belt **120** into the gap between the lower run of left side conveyor belt **120** and the upper surface of center conveyor belt **124.** In this manner, crop material projected by the right side conveyor belt **122** is retained and not lost.

The upper surface of the second crop deflector **114** extends between the leading edge **144** and the trailing edge **154** of the second crop deflector **114.** The upper surface is disposed at an angle as best shown in Figure 3, such that the leading edge **144** is above the trailing edge **154.**

The above described embodiments are not limited to the concept of the invention, but describe only the currently preferred embodiments. Within the scope of the invention, many other variants can be envisaged. For example, the deflectors may be disposed at the angle shown herein, or they may be more horizontal or more vertical. The leading edge of the deflectors may be disposed at the level shown herein, or it may be disposed higher or lower. The trailing edge of the deflectors may be disposed at the level shown herein, or it may be disposed higher, or lower. The deflectors may be curved to provide a convex or a concave upper surface. The deflectors may be creased or bent. The deflectors may be fixed to any stationary structure adjacent to the deflectors. The particular structure or structures to which they are fixed forms no part of the present invention. As long as they are held in position to perform the functions described herein, it is sufficient.

## Claims

1. A harvesting head **(100)** is provided comprising:
a laterally extending frame **(102),**
a left side conveyor belt **(120)** supported by the laterally extending frame **(102)** on the left side of the laterally extending frame **(102),** the left side conveyor belt **(120)** having an upper surface and a crop outlet, the upper surface being configured to convey cut crop material in a first direction, the left side conveyor belt **(120)** being supported at its innermost extent on a first inner conveyor roller **(126);**
a right side conveyor belt **(122)** supported by the laterally extending frame **(102)** on the right side of the laterally extending frame **(102),** located opposite to and spaced apart from the left side conveyor belt **(120),** the right side conveyor belt **(122)** having an upper surface and a crop outlet, the upper surface being configured to convey cut crop material in a second direction, the right side conveyor belt **(122)** being supported at its innermost extent on a second inner conveyor roller **(128),** wherein the first direction and the second direction are diametrically opposed;
a center conveyor belt **(124)** disposed between and below the outlets of the left and right side conveyor belts **(120, 122),** the center conveyor belt **(124)** having an upper surface configured to convey crops in a third direction normal to both the first direction and the second direction; and
a first crop deflector **(112)** extending across substantially the entire width of the left side conveyor belt **(120),** the first crop deflector **(112)** having a leading edge **(134)** that extends across substantially the entire width of the left side conveyor belt **(120)** and parallel with the rotational axis of the first inner conveyor roller **(126)** and at at least the same height as the rotational axis **(136)** of the first inner conveyor roller **(126),** and a trailing edge **(142)** opposite the leading edge **(134)** that extends across substantially the entire width of the left side conveyor belt **(120)** and is generally parallel to and spaced slightly apart from the upper surface of the center conveyor belt **(124);**
a second crop deflector **(114)** extending across substantially the entire width of the right side conveyor belt **(122),** the second crop deflector **(114)** having a leading edge **(144)** that extends across substantially the entire width of the right side conveyor belt **(122)** and parallel with the rotational axis **(146)** of the second inner conveyor roller **(128)** and at least the same height as the rotational axis **(146)** of the second inner conveyor roller **(128),** and a trailing edge **(154)** opposite the leading edge **(144)** of the second crop deflector **(114),** wherein the trailing edge **(154)** of the second crop deflector **(114)** extends across substantially the entire width of the right side conveyor belt **(122)** and is generally parallel to and spaced slightly apart from the upper surface of the center conveyor belt **(124).**

2. The harvesting head **(100)** of claim 1, wherein the left side conveyor belt **(120),** the right side conveyor belt **(122)** and the center conveyor belt **(124)** are each an endless loop of elastomer-coated fabric and are configured to convey a mat of fibrous plant stalks and loose seed.

3. The harvesting head **(100)** of claim 1, wherein a first gap is provided between the leading edge **(134)** of the first crop deflector **(112)** and the left side conveyor belt **(120)** that extends substantially the entire width of the left side conveyor belt **(120)** and is below the top surface of the left side conveyor belt **(120)** and is narrow enough to prevent substantially all the cut crop material exiting the left side conveyor belt **(120)** from entering the first gap.

4. The harvesting head **(100)** of claim 3, wherein a second gap is provided between the leading edge **(144)** of the second crop deflector **(114)** and the right side conveyor belt **(122)** that extends substantially the entire width of the right side conveyor belt **(122)** and is below the top surface of the right side conveyor belt **(122)** and is narrow enough to prevent substantially all the cut crop material exiting the right side conveyor belt **(122)** from entering the second gap.

5. The harvesting head **(100)** of claim 3, wherein a third gap is provided between the trailing edge **(142)** of the first crop deflector **(112)** and the center conveyor belt **(124)** that extends substantially the entire length of the center conveyor belt **(124)** and is below the leading edge **(134)** and is narrow enough to prevent substantially all the cut crop material exiting the right side conveyor belt **(122)** from entering the third gap.

6. The harvesting head **(100)** of claim 3, wherein a fourth gap is provided between the trailing edge **(154)** of the second crop deflector **(114)** and the center conveyor belt **(124)** that extends substantially the entire length of the center conveyor belt **(124)** and is below the leading edge **(144)** and is narrow enough to prevent substantially all the cut crop material exiting the left side conveyor belt **(120)** from entering the fourth gap.

7. A harvesting head **(100)** crop deflector is provided, the harvesting head **(100)** having a laterally extending frame **(102),** a left side conveyor belt **(120)** supported by the laterally extending frame **(102)** on the left side of the laterally extending frame **(102),** the left side conveyor belt **(120)** having an upper surface and a crop outlet, the upper surface being configured to convey cut crop material in a first direction, the left side conveyor belt **(120)** being supported at its innermost extent on a first inner conveyor roller **(126),** a right side conveyor belt **(122)** supported by the laterally extending frame **(102)** on the right side of the laterally extending frame **(102),** located opposite to and spaced apart from the left side conveyor belt **(120),** the right side conveyor belt **(122)** having an upper surface and a crop outlet, the upper surface being configured to convey cut crop material in a second direction, the right side conveyor belt **(122)** being supported at its innermost extent on a second inner conveyor roller **(128),** wherein the first direction and the second direction are diametrically opposed, a center conveyor belt **(124)** disposed between and below the outlets of the left and right side conveyors, the center conveyor belt **(124)** having an upper surface configured to convey crops in a third direction normal to both the first direction and the second direction,
wherein the crop deflector **(112, 114)** is an elongate member that extends across substantially the entire width of either the left side conveyor belt **(120)** or the right side conveyor belt **(122),** wherein the crop deflector **(112, 114)** has a leading edge **(134, 144)** configured to extend across substantially the entire width of said either the left side conveyor belt **(120)** or the right side conveyor belt **(122),** wherein the crop deflector **(112, 114)** extends parallel with the rotational axis **(136, 146)** of either the first inner conveyor roller **(126)** or the second inner conveyor roller **(128)** and at at least the same height as the rotational axis **(136, 146)** of either the first inner conveyor roller **(126)** or the second inner conveyor roller **(128),** the crop deflector **(112, 114)** further having a trailing edge **(142, 154)** opposite the leading edge **(134, 144),** wherein said trailing edge **(142, 154)** is configured to extend across substantially the entire width of the left side conveyor belt **(120)** or the right side conveyor belt **(122)** and wherein said trailing edge **(142, 154)** is configured to be disposed generally parallel to and spaced slightly apart from the upper surface of the center conveyor belt **(124).**

8. The harvesting head **(100)** of claim 7, wherein the crop deflector **(112, 114)** is configured to be mounted on the harvesting head **(100)** such that the leading edge **(134, 144)** of the crop deflector **(112, 114)** extends substantially the entire width of either the left side conveyor belt **(120)** or the right side conveyor belt **(122)** and is below the top surface of said either the left side conveyor belt **(120)** or the right side conveyor belt **(122)** to create a first gap therebetween that is narrow enough to prevent substantially all the cut crop material exiting the said either the left side conveyor belt **(120)** or the right side conveyor belt **(122)** from entering the first gap.
